Europäisches Patentamt

(19) European Patent Office

Office européen des brevets

(11) Numéro de publication: **0 114 553**
**A1**

## (12) DEMANDE DE BREVET EUROPEEN

(21) Numéro de dépôt: **83402443.2**

(22) Date de dépôt: **16.12.83**

(51) Int. Cl.³: **H 04 N 9/31**

(30) Priorité: **21.12.82 FR 8221394**

(43) Date de publication de la demande:
**01.08.84 Bulletin 84/31**

(84) Etats contractants désignés:
**DE GB NL**

(71) Demandeur: **THOMSON-CSF**
**173, Boulevard Haussmann**
**F-75379 Paris Cedex 08(FR)**

(72) Inventeur: **Favreau, Michel**
**THOMSON-CSF SCPI- 173, bld Haussmann**
**F-75379 Paris Cedex 08(FR)**

(72) Inventeur: **Lacotte, Jean-Pierre**
**THOMSON-CSF SCPI- 173, bld Haussmann**
**F-75379 Paris Cedex 08(FR)**

(74) Mandataire: **Turlèque, Clotilde et al,**
**THOMSON-CSF SCPI 173, Bld Haussmann**
**F-75379 Paris Cedex 08(FR)**

(54) **Projecteur d'images de télévision en couleurs.**

㊼ Le projecteur selon l'invention comprend une source lumineuse puissante (4), un dispositif optique (5) de modulation achrome, un écran diffusant (6), un disque (8) portant trois filtres de couleur rouge, verte et bleue, qui est entraîné par un moteur (7), et des moyens (2 et 3) recevant un signal vidéo composite transmettant simultanément trois informations de couleurs. Un décodeur de chrominance (2) décompose le signal vidéo composite en un signal de luminance Y et deux signaux de différence de couleurs v et u. Les valeurs de ces trois signaux sont stockées dans trois mémoires numériques (15, 16 et 17) pendant une durée correspondant à une trame de l'image analysée. Elles sont relues trois fois pendant la même durée, elles sont dématricées et les signaux de couleurs obtenus, R, V, B sont appliquées à une entrée du dispositif optique (5) de modulation achrome afin de restituer successivement une image rouge, une image verte, et une image bleue. Un dispositif de synchronisation (9) commande le moteur (7), de telle façon que le filtre porté par le disque (8) colore chacune de ces trois images en synchronisme avec les trois lectures effectuées dans les mémoires (15, 16, 17), et commande un multiplexeur (22) sélectionnant un des signaux de couleurs.

Application à la projection sur grand écran d'une image de télévision en couleurs transmise selon un procédé de transmission simultanée : NTSC, PAL, SECAM, etc... .

./...

Fig.1

1

## Projecteur d'images de télévision en couleurs

L'invention concerne les projecteurs permettant à un grand nombre de personnes de regarder simultanément une image de télévision en couleurs.

Pour projeter une image de télévision sur un écran dont la surface ne dépasse pas un mètre carré, il est connu d'utiliser un tube cathodique classique en augmentant sa brillance au maximum et en projetant l'image sur cet écran par un système optique de grande ouverture. L'écran utilisé est en général courbe, et la projection doit être réalisée dans le noir car la luminosité de l'image obtenue est très faible. Il est connu aussi d'utiliser trois tubes cathodiques, bleu, rouge, et vert, et de projeter sur un même écran les trois images qu'ils fournissent. La luminance de l'image obtenue est plus grande mais la superposition des deux ou trois images est délicate à réaliser. Ce procédé est utilisable pour une projection sur un écran d'une surface de 1 à 5 mètres carrés.

Pour une projection sur un écran de surface plus importante il est connu des procédés consistant à utiliser une lampe de très forte puissance et à moduler la lumière qu'elle fournit. Un premier type de dispositif de projection achrome fonctionnant selon ce principe comporte une source lumineuse de forte puissance qui projette ses rayons lumineux, rendus parallèles par un condenseur, sur un premier écran opaque dans lequel un certain nombre de fentes sont ménagées. Une lentille forme l'image du premier écran opaque sur un second écran opaque dont la forme est complémentaire de celle du premier de telle façon que la lumière transmise par les fentes du premier écran est arrêtée par les parties opaques du second. Entre la lentille et le premier écran est intercalé un disque de verre qui est en rotation autour de son axe de symétrie, axe qui est parallèle à l'axe optique du dispositif. Le disque transparent est recouvert d'une couche d'huile sur laquelle un faisceau électronique inscrit une image formée de charges électriques statiques. Ces charges électriques provoquent des déformations locales de la surface de la couche d'huile qui sont fonctions des caractéristiques du faisceau d'électrons et celui-ci est modulé par un signal vidéo. L'image électronique ainsi inscrite à la surface de l'huile modifie son pouvoir de diffraction. La lumière traversant la surface de l'huile est donc diffractée d'une manière variable par les différents points de l'image inscrite au moyen du faisceau électronique, les rayons lumineux constituant l'image du premier écran ne sont plus totalement occultés par le second. Ceux qui le traversent correspondent aux points diffractants de la surface de l'huile et fournissent une image qui est projetée sur un écran diffusant par l'intermédiaire d'une lentille.

Pour réaliser un système de projection pour des images de télévision en couleurs, images transmises par trois signaux de couleurs simultanés, il est connu de combiner trois dispositifs de ce type muni chacun d'un filtre coloré et de superposer sur un même écran diffusant les trois images obtenues. Ce dispositif est alors très encombrant, et la superposition des images est délicate à obtenir.

Un deuxième type de dispositif est connu pour projeter des images de télévision en couleurs. Il est dérivé du type précédent. Il projette simultanément une image verte et une image rouge et bleue obtenues par un seul disque à film d'huile. Un faisceau lumineux fourni par une source de lumière blanche est séparé en un faisceau vert et en un faisceau rouge et bleu qui éclairent respectivement deux premiers écrans opaques comportant des fentes, les fentes de l'un étant orthogonales aux fentes de l'autre. Une première lentille projette une image des premiers écrans opaques sur deux seconds écrans opaques dont la forme est complémentaire de celle des premiers, de façon à occulter la lumière traversant les fentes des premiers. Un disque transparent unique, recouvert d'un film d'huile, est intercalé entre les premiers écrans et la première lentille. Un faisceau électronique inscrit une image unique sur le film d'huile. Le faisceau lumineux vert est modulé en commandant la largeur des lignes balayées par le faisceau. Ceci est réalisé en additionnant une sous-porteuse de fréquence élevée au signal de déflexion verticale du faisceau et en modulant l'amplitude de cette sous-porteuse par le signal de couleur verte. Le faisceau rouge et bleu est modulé par deux réseaux de diffraction perpendiculaires aux lignes de balayage et réalisés en modulant la vitesse de balayage des lignes. Cette modulation de vitesse est obtenue en additionnant au signal de déflexion horizontale une sous-porteuse de fréquence 16 MHz pour le rouge et une sous-porteuse de fréquence 12 MHz pour le bleu. L'amplitude de ces sous-porteuses est modulée respectivement par le signal de couleur rouge et le signal de couleur bleue. Les réseaux ainsi créés ont les dimensions adéquates pour diffracter respectivement la partie rouge et la partie bleue du spectre, et bloquer respectivement la partie bleue et la partie rouge. Ainsi trois images simultanées et superposées sont obtenues avec un faisceau électronique unique puis sont projetées sur un écran diffusant par une seconde lentille. Ce dispositif est plus simple qu'un système de trois dispositifs du premier type, la convergence étant réalisée par le fait qu'il n'y qu'une seule image électronique ; par contre le rendement lumineux n'est pas excellent à cause de la dissipation de la partie rouge et de la partie bleue du spectre dans les deux réseaux de diffraction, et la saturation des couleurs n'est pas excellente à cause des phénomènes de diffraction du second ordre.

D'autre part il est connu d'utiliser un dispositif unique, de projection achrome, pour projeter des images de télévision, en couleurs, transmises sous la forme de trois trames successives : une trame rouge, une trame bleue, et une trame verte. Un tel dispositif est décrit dans la demande de brevet US 3 821 793. Il comporte un disque tournant portant trois filtres colorés : rouge, bleu, vert, intercalé entre un projecteur achrome et une optique de projection. La prise de vue est réalisée par une caméra achrome munie d'un disque tournant analogue, portant trois filtres colorés. La rotation des deux disques porte-filtres est synchronisée. Ce type de dispositif est simple mais ne convient malheureusement pas pour la télévision grand public où le signal vidéo transmet simultanément trois signaux de couleurs, quelque soit le standard : NTSC, PAL, SECAM, etc, pour permettre la réception par des récepteurs achromes classiques. Un premier objet de l'invention est de remédier à cet inconvénient par des moyens simples.

Par ailleurs, le dispositif décrit dans le brevet cité a pour inconvénient de réaliser un filtrage en aval du projecteur. Celui-ci génère et module une puissance dont les deux tiers sont dissipés ensuite par le filtrage. Il est donc inutilement surdimensionné. Un second objet de

4

l'invention est de réduire la puissance modulée par le dispositif de projection, en intercalant un disque porte-filtres entre une source de lumière blanche et un dispositif de modulation achrome et de projection. Le dispositif de modulation n'est alors traversé que par un tiers de la puissance lumineuse émise par la source, d'où un échauffement moindre et un bien meilleur rendement.

L'invention a pour objet un projecteur d'images de télévision en couleurs, ces images étant transmises par un signal vidéo composé de trois signaux composants simultanés, qui est caractérisé en ce qu'il comporte :

- des moyens pour projeter une image de télévision en noir et blanc ;

- des moyens pour colorer cette image successivement en trois couleurs, la durée de chaque couleur étant égale à un tiers de la durée d'une trame d'analyse ;

- des moyens pour stocker simultanément les valeurs des trois signaux composants correspondant à une trame de l'image analysée, et pour fournir séquentiellement couleur après couleur les valeurs de trois signaux de couleur aux moyens pour projeter, en synchronisme avec le changement de couleur opéré par les moyens pour colorer.

L'invention sera mieux comprise et d'autres détails apparaîtront à l'aide de la description ci-dessous et des figures l'accompagnant :

La figure 1 représente un schéma synoptique d'un exemple de réalisation du projecteur selon l'invention ;

La figure 2 illustre le fonctionnement d'une variante du dispositif de la figure 1.

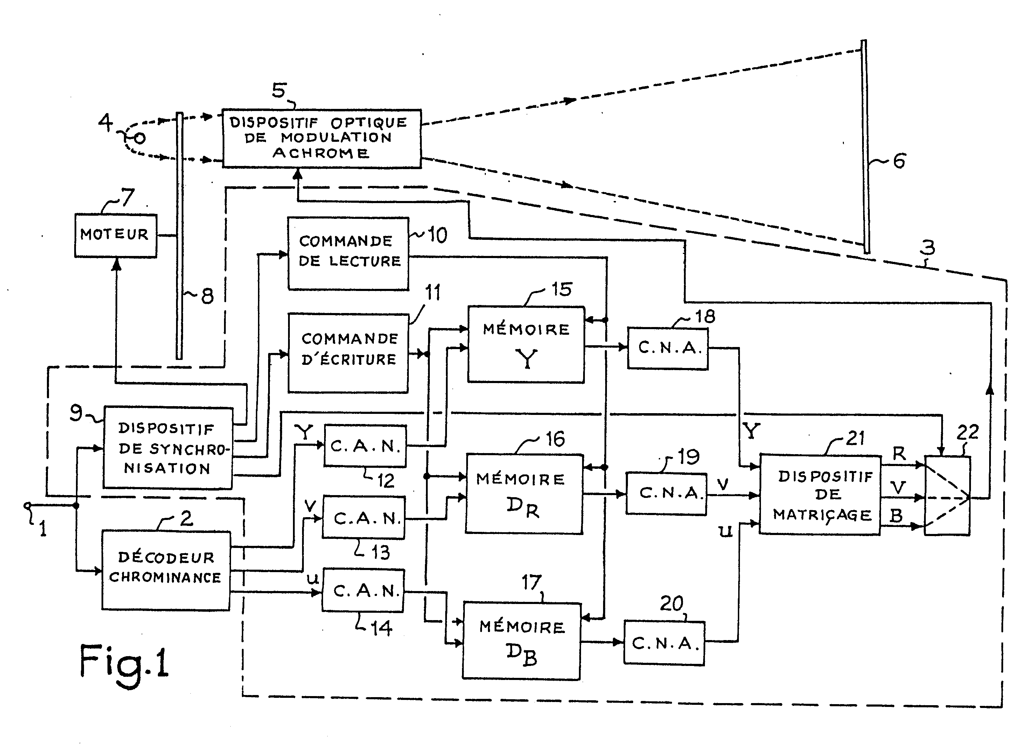

Le dispositif représenté sur la figure 1 comporte des moyens pour projeter une image de télévision en noir et blanc, des moyens pour colorer cette image, des moyens pour recevoir et décomposer un signal vidéo composite en trois signaux composants, et des moyens pour stocker ces signaux et fournir les valeurs de trois signaux de couleurs.

Les moyens pour projeter une image de télévision en noir et blanc sont constitués d'une source lumineuse 4 de grande puissance, d'un dispositif optique 5 de modulation achrome, et d'un écran diffusant 6. C'est, par exemple, un dispositif de projection en noir et blanc à film d'huile. La lumière blanche émise par la source 4 est colorée par des moyens optiques de filtrage spectral, est modulée par le dispositif optique 5, puis est projetée sur l'écran 6. Les moyens de filtrage optique sont constitués par un disque porte-filtres 8 comportant trois filtres respectivement rouge, vert, et bleu. Le disque 8 est entraîné par un moteur électrique 7. La première lentille du dispositif de projection à film d'huile projette l'image d'un des filtres sur le film d'huile ; et la forme des filtres est telle que le bord de cette image reste parallèle aux lignes de balayage de l'image sur le film d'huile, en dépit de la rotation du disque 8. Les moyens pour recevoir et décomposer un signal vidéo composite sont constitués d'un décodeur de chrominance 2 relié à une borne d'entrée 1. Des moyens 3 pour stocker les valeurs de trois signaux fournis par le décodeur 2 et restituer les valeurs de trois signaux de couleurs sont constitués d'un dispositif de synchronisation 9, d'un dispositif de commande de lecture 10, d'un dispositif de commande d'écriture 11, de trois convertisseurs analogiques-numériques 12, 13, et 14, de trois mémoires vives 15, 16, et 17, de trois convertisseurs numériques-analogiques 18, 19, et 20, d'un dispositif de matriçage analogique 21, et d'un multiplexeur 22. Une première et une deuxième sortie des moyens 3 commandent respectivement le moteur 7 et le dispositif optique 5 de modulation achrome. Une première, une deuxième, une troisième, et une quatrième entrée des moyens 3 sont reliées respectivement à la borne d'entrée 1 et à trois sorties du décodeur de chrominance 2.

Un signal vidéo composite, par exemple aux normes PAL, est appliqué à la borne d'entrée 1. Le décodeur de chrominance 2 fournit respectivement à la deuxième, à la troisième, et à la quatrième entrée des moyens 3 un signal de luminance Y, un signal de différence de couleur rouge v et un signal de différence de couleur bleue u. Ces signaux sont analogiques et sont convertis en valeurs numériques respectivement par les convertisseurs analogiques-numériques 12, 13, et 14. Les mémoires vives 15, 16, et 17 stockent les signaux Y, v et u respectivement. Elles possèdent chacune une entrée de données, et ces entrées de données sont reliées respectivement aux sorties des convertisseurs 12, 13 et 14. Les mémoires 15, 16, et 17 possèdent chacune une sortie de données, et ces sorties sont reliées respectivement à une entrée des convertisseurs numériques-analogiques 18, 19, et 20. Les sorties de ces convertisseurs 18, 19, 20 sont reliées respectivement à trois entrées du dispositif de matriçage 21, et celui-ci a trois sorties fournissant trois signaux de couleurs R, V, B respectivement à trois entrées du multiplexeur 22. Ces trois signaux correspondent respectivement aux couleurs rouge, verte, et bleue. La sortie du multiplexeur 22 constitue la sortie des moyens 3. La première entrée des moyens 3 est reliée à une entrée du dispositif de synchronisation 9 qui possède une première sortie constituant la première sortie des moyens 3, une deuxième sortie reliée à une entrée du dispositif 10 de commande de lecture, une troisième sortie reliée à une entrée du dispositif 11 de commande d'écriture, et une quatrième sortie reliée à une entrée de commande du multiplexeur 22. Le dispositif 10 de commande de lecture possède une sortie reliée à une entrée de commande de lecture commune aux mémoires 15, 16 et 17. Le dispositif 11 de commande d'écriture possède une sortie reliée à une entrée de commande d'écriture commune aux mémoires 15, 16, et 17.

Dans une première variante de réalisation les mémoires 15, 16, et 17 ont une capacité permettant de stocker les valeurs des signaux Y, v, et u pour deux trames d'images, et sont à accès aléatoire. Pendant une durée T correspondant à l'analyse d'une trame d'image une première moitiée de chacune des mémoires 15, 16 et 17 est inscrite, pendant que la seconde moitié de chacune de ces mémoires est lue trois fois pour restituer successivement en trois couleurs la précédente trame analysée. Le dispositif 11 de commande d'écriture fournit à chacune des mémoires 15, 16, et 17 une valeur d'adresse et un signal de commande d'écriture pour chaque triplet de valeurs numériques fourni par les convertisseurs 12, 13 et 14. Dans cet exemple de réalisation le convertisseur 12 founit un mot binaire de 8 bits pour chaque point analysé et les convertisseurs 13 et 14 fournissent chacun un mot binaire de huit bits à une fréquence moitié de la fréquence d'échantillonnage. Chaque ligne comportant 720 points, la mémoire 15 stocke 720 valeurs, mais les mémoires 16 et 17 ne stockent que 360 valeurs chacune, chaque valeur d'un signal de différence de couleurs u ou v étant prise égale pour 2 points voisins. L'adressage de lecture ou d'écriture des mémoires 16 et 17 est réalisé avec la valeur binaire d'adressage de la mémoire 15, mais en supprimant le bit de poids le plus faible.

Pendant la durée T d'analyse d'une trame, et de stockage des valeurs Y, v , u correspondantes dans une première moitié des mémoires 15, 16 et 17, la seconde moitié de chacune des mémoires 15, 16, et 17 est lue à des adresses fournies par le dispositif 10 de commande de lecture à un rythme égal à trois fois celui de l'écriture, et ces adresses sont validées par un signal de commande de lecture. Sous l'action de ce signal de commande les mémoires 15, 16 et 17 fournissent un triplet de valeurs numériques qui est converti en un triplet de signaux analogiques Y, v , u , par les convertisseurs numériques-analogiques 18, 19 et 20. Le dispositif de matriçage 21 fournit les trois signaux analogiques de couleurs R, V, et B. Pendant un premier tiers de la durée de la restitution le multiplexeur analogique 22 transmet la valeur du signal R, pendant un deuxième tiers il transmet la valeur du signal V, et pendant un troisième tiers de cette durée il transmet la valeur du signal B. Le dispositif de synchronisation 9 commande le moteur 7 et le multiplexeur 22 de telle façon que le filtre rouge est placé devant la source lumineuse 4 pendant que le signal R est transmis au dispositif optique 5 de modulation, de telle façon que le filtre vert est placé devant la source lumineuse 4 pendant que le signal V est transmis, et de telle façon que le filtre bleu est placé devant la source lumineuse 4 pendant que le signal B est transmis. Dans un exemple de réalisation où le disque 8 porte-filtres comporte trois secteurs colorés, le moteur 7 fait un tour pendant la durée T de restitution d'une trame. Le dispositif de synchronisation 9 détecte, dans le signal vidéo composite qui lui est appliqué, les impulsions de synchronisation de trames et les impulsions de synchronisation de lignes, et génère : des signaux d'initialisation et des signaux d'horloge commandant les dispositifs 10 et 11, un signal de synchronisation du moteur 7, et un signal de commande du multiplexeur 22.

Dans un autre exemple de réalisation, les mémoires 15, 16, et 17 peuvent être constituées chacune de 2 registres à décalage ayant chacun une capacité correspondant à une trame. Un premier registre étant inscrit pendant qu'un second est lu, indépendamment et avec une vitesse de lecture trois fois plus grande que la vitesse d'écriture. Pendant les 3

8

lectures un rebouclage assure la conservation des informations stockées. Dans ce cas les dispositifs 10 et 11 ne fournissent pas des valeurs d'adresse et un signal de validation, mais une suite d'impulsions de commande de décalage, comportant 720 impulsions par ligne d'image. Un diviseur par deux est alors prévu pour ne fournir qu'une impulsion sur deux aux entrées de commande des mémoires 16 et 17 qui ne stockent que 360 valeurs. La réalisation des dispositifs 9, 10, 11, comme dans l'exemple précédent, est à la portée de l'homme de l'art.

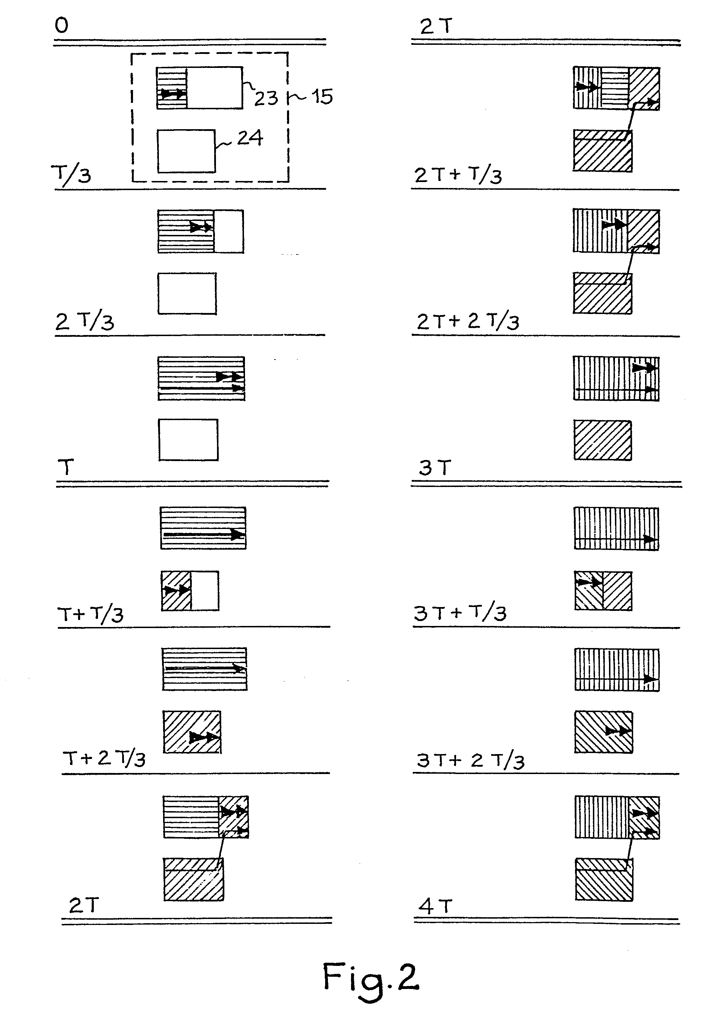

Une seconde variante de réalisation des mémoires 15, 16, et 17 et des dispositifs 10 et 11 permet de réduire la capacité de ces mémoires à une valeur correspondant à cinq tiers de trames. La figure 2 illustre le fonctionnement de chacune de ces mémoires. Chacune de ces mémoires peut être considérée comme constituée d'une première partie 23 ayant une capacité correspondant à une trame, et d'une deuxième partie 24 ayant une capacité correspondant à deux tiers de trame, ces deux parties ayant les mêmes valeurs d'adresses à l'exception du bit de poids le plus fort. La figure 2 illustre les opérations d'écriture et de lecture effectuées par exemple dans la mémoire 15 pour les valeurs de luminance Y mais elles sont analogues et simultanées dans les mémoires 16 et 17. L'opération d'écriture est représentée par une flèche épaisse et l'opération de lecture est représentée par une flèche mince.

Entre les instants 0 et $\frac{T}{3}$ les valeurs du signal de luminance correspondant à un premier tiers d'une première trame d'analyse sont inscrites dans la première partie 23 de la mémoire 15. Entre les instants $\frac{T}{3}$ et $2\frac{T}{3}$ les valeurs de luminance correspondant à un deuxième tiers de la première trame d'analyse sont inscrites dans la première partie 23 de la mémoire 15. Entre les instants $2\frac{T}{3}$ et T les valeurs de luminance correspondant à un troisième tiers de la première trame d'analyse sont inscrites dans la première partie 23 de la mémoire 15 et simultanément les valeurs de luminance de cette première trame sont lues, à une vitesse trois fois plus grande, dans la première partie 23 de la mémoire 15 afin de restituer une première couleur de la première trame d'analyse. La dernière valeur de luminance de la première trame d'analyse est inscrite juste avant la fin de la lecture de l'ensemble de ces valeurs de luminance.

Entre les instants T et $T + \frac{T}{3}$ les valeurs de luminance correspondant à un premier tiers de la deuxième trame d'analyse sont inscrites dans la deuxième partie 24 de la mémoire 15. Ces informations sont représentées sur la figure 2 par des hachures différentes de celles représentant les informations correspondant à la première trame. Simultanément les valeurs de luminance correspondant à la première trame d'analyse sont lues une deuxième fois dans la première partie 23 de la mémoire 15, afin de restituer une deuxième couleur de cette première trame. Entre les instants $T + \frac{T}{3}$ et $T + 2\frac{T}{3}$ les valeurs de luminance correspondant à un deuxième tiers de la deuxième trame d'analyse sont inscrites dans la deuxième partie 24 de la mémoire 15. Simultanément les valeurs de luminance correspondant à la première trame d'analyse sont lues une troisième fois dans la première partie 23 de la mémoire 15, afin de restituer une troisième couleur de cette première trame. Entre les instants $T + 2\frac{T}{3}$ et 2T les valeurs de luminance correspondant à un troisième tiers de la deuxième trame d'analyse sont inscrites dans la première partie 23 de la mémoire 15 à l'emplacement où étaient stockées les valeurs de luminance correspondant au troisième tiers de la première trame. Simultanément les valeurs de luminance correspondant à l'ensemble de la deuxième trame d'analyse sont lues d'une part dans la deuxième partie 24 et d'autre part dans la première partie 23 de la mémoire 15, afin de restituer une première couleur de la deuxième trame d'analyse. La dernière valeur de luminance de cette deuxième trame est inscrite juste avant la fin de la lecture de l'ensemble de ces valeurs de luminance.

Entre les instants 2T et $2T + \frac{T}{3}$ les valeurs de luminance correspondant à un premier tiers de la troisième trame d'analyse sont inscrites dans la première partie 23 de la mémoire 15. Simultanément les valeurs de luminance correspondant à l'ensemble de la deuxième trame d'analyse sont lues dans la deuxième partie 24 puis dans la première partie 23 de la mémoire 15, afin de restituer une deuxième couleur de cette deuxième trame. Entre les instants $2T + \frac{T}{3}$ et $2T + 2\frac{T}{3}$ les valeurs de luminance d'un deuxième tiers de la troisième trame d'analyse sont inscrites dans la première partie 23 de la mémoire 15. Simultanément les valeurs de luminance de l'ensemble de la deuxième trame d'analyse sont lues une troisième fois pour restituer une troisième couleur de cette deuxième trame. Entre les instants $2T + 2\frac{T}{3}$ et $3T$ les valeurs de luminance correspondant à un troisième tiers de la deuxième trame d'analyse sont inscrites dans la première partie 23 de la mémoire 15. Simultanément les valeurs de luminance de l'ensemble de la troisième trame d'analyse sont lues dans la première partie 23 de la mémoire 15, afin de restituer une première couleur de cette troisième trame. L'inscription de la dernière valeur de luminance correspondant à la troisième trame d'analyse est réalisée juste avant la fin de la lecture des valeurs de luminance correspondant à cette troisième trame.

Entre les instants $3T$ et $3T + \frac{T}{3}$ les valeurs de luminance correspondant à un premier tiers de la quatrième trame d'analyse sont inscrites dans la deuxième partie 24 de la mémoire 15. Simultanément les valeurs de luminance correspondant à la troisième trame d'analyse sont lues une deuxième fois dans la première partie 23 de la mémoire 15. Entre les instants $3T + \frac{T}{3}$ et $3T + 2\frac{T}{3}$ les valeurs de luminance correspondant à un deuxième tiers de la quatrième trame d'analyse sont inscrites dans la deuxième partie 24 de la mémoire 15. Simultanément les valeurs de luminance correspondant à l'ensemble de la troisième trame d'analyse sont lues une troisième fois dans la première partie 23 de la mémoire 15, afin de restituer une troisième couleur de cette troisième trame. Entre les instants $3T + 2\frac{T}{3}$ et $4T$ les valeurs de luminance correspondant à un troisième tiers de la quatrième trame d'analyse sont inscrites dans la première partie 23 de la mémoire 15 à l'emplacement où étaient stockées les valeurs de luminance correspondant au troisième tiers de la troisième trame d'analyse. Simultanément les valeurs de luminance correspondant à l'ensemble de la quatrième trame d'analyse sont lues dans la deuxième partie 24 puis dans la première partie 23 de la mémoire 15, afin de restituer une première couleur de cette quatrième trame. La dernière valeur de luminance correspondant à la quatrième trame d'analyse est inscrite juste avant la fin de la lecture de l'ensemble des valeurs correspondant à cette quatrième trame.

Le fonctionnement de la mémoire 15 continue identiquement avec une période correspondant à deux trames d'analyse et égale à 2T. La suite des valeurs d'adresse fournies par le dispositif 11 de commande d'écriture pendant les demi-périodes impaires correspond à l'ensemble de la première partie 23 de la mémoire 15, et pendant les demi-périodes paires correspond à l'ensemble de la deuxième partie 24 puis au troisième tiers de la première partie 23 de la mémoire 15. Pendant chaque demi-période la sortie du dispositif 11 de commande de la lecture fournit trois suites de valeurs d'adresse. Pendant les demi-périodes impaires les deux premières suites de valeurs d'adresse de lecture correspondent à l'ensemble de la deuxième partie 24 de la mémoire 15 et au troisième tiers de la première partie 23 ; la troisième suite de valeur d'adresse de lecture correspond à l'ensemble de la première partie 23. Pendant les demi-périodes paires les deux premières suites de valeurs d'adresse de lecture correspondent à l'ensemble de la première partie 23 ; la troisième suite de valeurs d'adresse de lecture correspond à l'ensemble de la deuxième partie 24 et au troisième tiers de la première partie 23 de la mémoire 15.

Dans le cas particulier de la première demi-période, des lectures peuvent être effectuées comme dans le cas général mais celles effectuées entre les instants 0 et $2\frac{T}{3}$ sont inutiles.

Naturellement il serait possible de permuter le rôle des deux premiers tiers de la partie 23 et le rôle de la partie 24 de la mémoire 15.

Il est à la portée de l'homme de l'art de réaliser un compteur d'adresses d'écriture et un compteur d'adresses de lecture fournissant ces suites de valeur avec la période 2T.

La portée de l'invention ne se limite pas aux exemples de réalisation décrits ci-dessus, de nombreuses variantes sont possibles. Il est possible notamment de stocker non pas les valeurs de luminance et les valeurs des différences de couleurs, mais les valeurs des trois signaux de couleurs : R, V, et B, à condition de prévoir une capacité identique de huit bits par point d'image dans chacune des mémoires 15, 16, 17. Le dispositif de matriçage 21 et le multiplexeur 22 sont alors supprimés et le décodeur de chrominance 2 fournit les signaux R, V, B au lieu des signaux Y, v , u. Dans une autre variante il serait possible d'utiliser un dispositif de matriçage 21 numérique situé en amont des convertisseurs numériques-analogiques 18, 19, 20, à condition de disposer d'un dispositif de matriçage numérique dont la vitesse soit compatible avec le standard de télévision utilisé. Le dispositif optique 5 de modulation achrome peut être un dispositif autre qu'un dispositif à film d'huile, par exemple un dispositif à biréfringence commandée, ou à critaux liquides. Le dispositif de filtrage optique peut être constitué d'un disque portant n jeux de trois filtres rouge, vert, bleu, tournant d'un tour en un temps n x T (n entier supérieur à 1).

Les moyens pour colorer l'image, constitués par la source de lumière blanche 4 et le disque porte-filtres 8, peuvent être remplacés par une combinaison de trois sources lumineuses colorées s'allumant séquentiellement, une pendant chaque intervalle de temps séparant le balayage de deux trames sur le film d'huile ; la rémanence du film d'huile stockant chaque trame pendant une durée $\frac{T}{3}$.

Le rendement lumineux du dispositif selon l'invention est très supérieur à celui d'un dispositif à un film d'huile portant deux réseaux de diffraction, puisque le film d'huile n'a pas à dissiper une partie du spectre lumineux.

Le dispositif selon l'invention peut être appliqué à la projection sur grand écran d'images transmises selon n'importe quel type de procédé à transmission simultanée de trois informations de couleur, NTSC, PAL, SECAM etc..., en adaptant le décodeur de chrominance 2.

0114553

13

## REVENDICATIONS

1. Projecteur d'images de télévision en couleurs, ces images étant transmises par un signal vidéo composé de trois signaux composants simultanés, caractérisé en ce qu'il comporte :

- des moyens (4, 5, 6) pour projeter une image de télévision en noir et blanc ;

- des moyens (7, 8) pour colorer cette image successivement en trois couleurs, la durée de chaque couleur étant égale à un tiers de la durée d'une trame d'analyse ;

- des moyens (3) pour stocker simultanément les valeurs des trois signaux composants correspondant à une trame de l'image analysée, et pour fournir séquentiellement couleur après couleur les valeurs de trois signaux de couleur, aux moyens (4, 5, 6) pour projeter, en synchronisme avec le changement de couleur opéré par les moyens pour colorer (7, 8).

2. Projecteur selon la revendication 1, caractérisé en ce que les moyens (3) pour stocker les valeurs des trois signaux composants et comportent, pour chacun de ces signaux composants une mémoire (15, 16, 17) constituée de deux registres à décalage ayant chacun une capacité correspondant à une trame de l'image analysée, l'un de ces registres étant inscrit pendant que l'autre est lu trois fois, durant l'analyse de chaque trame d'image.

3. Projecteur selon la revendication 1, caractérisé en ce que les moyens (3) pour stocker les valeurs des trois signaux composants comportent, pour chacun de ces signaux, une mémoire à accès aléatoire (15, 16 ou 17) dont la capacité correspond à cinq tiers de trame, une première partie de cette mémoire, de capacité correspondant à une trame, étant lue trois fois pendant la durée d'analyse d'une trame d'image et une deuxième partie, de capacité correspondant à une trame, étant inscrite durant la même période.

4. Projecteur selon l'une quelconque des revendications 1 à 3, caractérisé en ce que les moyens pour projeter et les moyens pour colorer une image comportent :

- une source de lumière blanche (4) ;

- des moyens de filtrage optique spectral (7,8) pour filtrer cette lumière blanche successivement en trois couleurs ;
- des moyens optiques (5) de modulation achrome et de projection pour projeter sur un écran (6) une image obtenue par modulation de la lumière filtrée par les moyens de filtrage (7, 8).

Fig.1

Fig.2

**Office européen
des brevets**

**RAPPORT DE RECHERCHE EUROPEENNE**

**0114553**

Numéro de la demande

EP  83 40 2443

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-4 305 092  (KATZFEY) <br> *  Colonne  2, ligne 42 - colonne 3,  ligne  6;  colonne 11, lignes 32-67 * <br><br> --- | 1,2,4 | H 04 N    9/31 |
| Y,D | US-A-3 821 793  (CARSON) <br> * Colonne 1, lignes 49-61 * <br><br> ----- | 1,2,4 | |

**DOMAINES TECHNIQUES RECHERCHES (Int. Cl. ³)**

H 04 N

Le présent rapport de recherche a été établi pour toutes les revendications

| Lieu de la recherche <br> LA HAYE | Date d'achèvement de la recherche <br> 09-03-1984 | Examinateur <br> CRISTOL Y. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82